# EUROPÄISCHE PATENTANMELDUNG

(11) **EP 1 788 528 A2**
(43) Veröffentlichungstag der Anmeldung: **23.05.2007**
(21) Anmeldenummer: 06122938.1
(22) Anmeldetag: 25.10.2006
(51) Int. Cl.: G06T 17/40

(54) **Verfahren und Vorrichtung zur Darstellung und Verarbeitung von mehrdimensionalen Scanneraufnahmen**

(30) Priorität: 26.10.2005 DE 102005051559
(71) Anmelder: DCMS AG, 8590 Romnahshorn (CH)
(72) Erfinder: Traumann, Jörg, 8590, Romanshorn (CH)
(74) Vertreter: Patentanwälte Kewitz & Kollegen

(57) **Zusammenfassung**

Die Erfindung betrifft ein Verfahren zur Bestimmung von Objekten in 3D-Scan-Daten. Durch die Erfindung erfolgt die Identifizierung von Objekten nicht mehr in den Scan-Daten. Vielmehr wird im CAD nur noch das Resultat der Bearbeitung als reine Vektoren dargestellt, also für das CAD angepasst dargestellt.

Kern der Erfindung ist die direkte Generierung von CAD-Objekten aus einem Pixelbild mithilfe eines Binärfiles.

Die Scanrohdaten (binäre xyz-Koordinaten) werden in Zeile, Spalte, Farbwert konvertiert. Es wird ein beliebiges Pixelformat verwendet.

Nach der Identifizierung der Objekte im Graufstufenpixelbild werden über ein Kommunikationsinterface, in dem die Umrechnung des Punktwertes im Pixelbild auf den xyz-Wert der Binärdatei vorgenommen wird, in CAD-Objekte generiert.

Der Nutzer arbeitet in einem exakten, scharfen Bild und identifiziert hier die Kanten, Punkte und damit die Objekte.

## Beschreibung

### Gebiet der Erfindung

Die Erfindung betrifft ein Verfahren zur Punktauswertung von mehrdimensionalen Laserscan-Aufnahmen insbesondere von 3D-Laserscan-Aufnahmen.

### Hintergrund der Erfindung

Der 3D-Laserscan ist ein Verfahren, das zunehmend, insbesondere im Industriebereich an Bedeutung gewinnt, da sehr schnell Gebäude, Bauteile, Anlagen, etc. räumlich exakt erfasst werden können. Hierbei scannt ein Laser, der vorzugsweise auf einem Stativ angeordnet ist, den Raum ab und liefert je nach Auflösung eine sehr große Datenmenge an 3D-Daten. Es ist ebenfalls denkbar, dass andere Informationen gesammelt werden, sodass 4-dimensionale Daten vorhanden sind.

In der Regel erfolgt eine manuelle oder teilautomatische Nachbearbeitung der Daten, bei denen Raumformen, Geraden oder Ebenen vom Bearbeiter identifiziert werden, um die Objekte für das CAD-System bereitzustellen.

Problematisch ist jedoch die Auswertung der aufgenommenen Daten, da es sich um Dateien mit Millionen von Koordinatenpunkten (zwischen 25 MB bis 1 GB - z.T. sogar noch größer) handelt.

Die Auswertung der Scans muss zur weiteren konstruktiven Bearbeitung in einem CAD-System erfolgen. CAD-Systeme arbeiten jedoch vektor- und nicht punktbasiert. Daher können CAD-Systeme große Punktemengen nicht oder nicht vernünftig handhaben. Eine Scandatei kann nicht komplett in das CAD-System importiert werden. Insoweit müssen referenzierte und/oder unreferenzierte Teilausschnitte in das CAD geladen werden und dort schwerfällig bearbeitet werden.

Die aktuellen Verfahren und Softwareprogramme basieren auf dem Prinzip, Teile der so genannten Punktwolke in das CAD zu exportieren und dort zu bearbeiten. Dies bewirkt jedoch eine Reihe von Problemen, die im Folgenden ausgeführt werden.

Um handhabbare Dateien im CAD bereitzustellen, dürfen nur kleine Teilausschnitte exportiert werden, das bringt jedoch eine fehlende Übersicht und Fehleranfälligkeit in der Auswertung mit sich.

Aufgrund des Linearitätsfehlers (es kommt zu Punktstreuung um eine Kante in Bereichen je nach Scannertyp von +/- 3 mm und größer) des Scans ist eine exakte Kantenbildung im CAD nicht erkennbar, vielmehr müssen fehlerträchtig Punkte gleicher Objekte und/oder Ebenen identifiziert und approximiert werden.

Ferner muss teilweise mit unterschiedlichen Export- und Importformaten für eine Zeichnung gearbeitet werden, was den Arbeitsablauf erneut schwierig gestaltet.

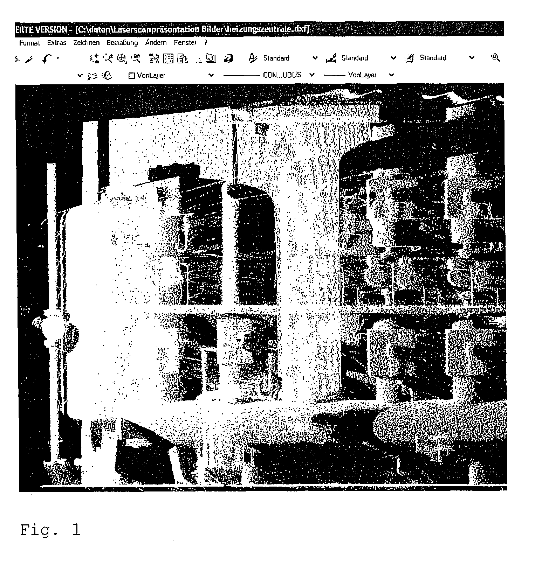

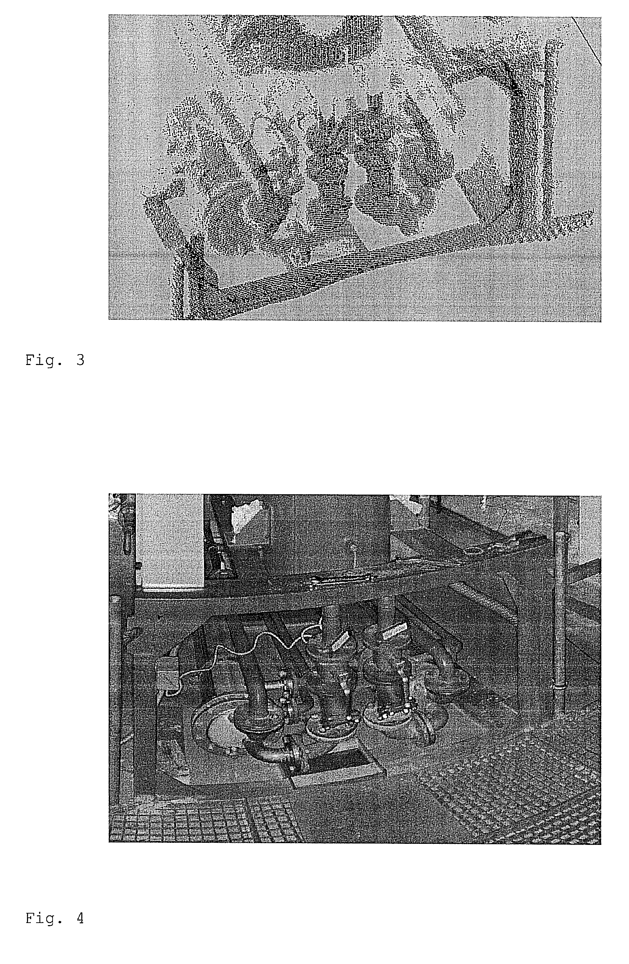

Die Identifikation von Bauteilen und Elementen in der Punktwolke im CAD ist problematisch und teilweise ein Ratespiel. Es ist mit sehr hohem Zeitaufwand verbunden, die zu identifizierenden Objekte in die richtige Lage zu transformieren und anschließend zu bearbeiten. Die Fig. 1 und 3 zeigen die Darstellungsprobleme bei einer normalen Bearbeitung in einem CAD-Programm.

Die Bearbeitung der Punktwolke im CAD ist aufgrund der sehr hohen Speicherbelegung sehr schwerfällig und damit extrem zeitaufwendig, da keinerlei Kompression erfolgt.

Hieraus ergibt sich, dass der Export aller oder von Teilmengen von Koordinatenpunkten des 3D-Scans direkt ins CAD eine mögliche - wenn auch zeitaufwendige und schwerfällige - Form der Bearbeitung ist, die hohe Anforderungen an den Bearbeiter und die Rechner stellt.

### Überblick über die Erfindung

Aufgabe der vorliegenden Erfindung ist eine einfachere Verarbeitung von mehrdimensionalen Scan-Daten bereitzustellen.

Gelöst wird diese Aufgabe durch eine Erfindung mit den Merkmalen der unabhängigen Ansprüche. Vorteilhafte Ausführungsformen finden sich in den Unteransprüchen.

Durch die Erfindung erfolgt die Identifizierung und Modellierung von Objekten nicht in den exportierten Koordinatenpunkten des Scans im CAD. Vielmehr wird im CAD nur noch das Resultat der Bearbeitung als reine Vektoren dargestellt, also in einer Form, die für das CAD angepasst ist.

Hierbei wird als Erstes die Scandatei in ein Graustufenbild oder in Zukunft auch in ein Farbbild z.B. im JPEG-Format umgewandelt. Die Scan-Rohdaten werden in Zeile, Spalte, Graustufe oder RGB-Farbwerte in ein Pixelbild konvertiert. Nach der Identifizierung im Pixelbild werden diese Punkte direkt über ein Kommunikationsinterface in das CAD-Programm geschrieben.

Alternativ können Punkte auch gesammelt werden und anschließend gesammelt an das CAD übertragen werden. Das Kommunikationsinterface steuert den Zugriff auf die Originalkoordinaten der Binärdatei aus dem Pixelbild (Reihe/Spalte) heraus. Gleichzeitig werden im Kommunikationsinterface diese Punkte zur Erstellung von CAD-Objekten (Punkte, Linien, Polylinien, Flächen, Volumenkörper, Netze) eingesetzt.

Der Nutzer arbeitet in einer exakten, scharfen Bilddatei und identifiziert hier die Kanten, Punkte und damit die Objekte.

Aufgrund von Reflektions- und Linearitätsfehlern kann es dazu kommen, dass benachbarte und/oder umgebende Punkte sehr starke Lageabweichungen aufweisen.

Zur Vermeidung, dass solch ein "falscher Punkt" in das CAD gelangt, wird die Lage der umgebenen Punkte in einem Diagramm angezeigt. Dies ermöglicht eine Nutzerprüfung der gewählten Punkte eines Objekts, sodass sichergestellt werden kann, dass nur dem Objekt zugehörige Punkte zur Erzeugung des Objektes im CAD verwendet werden.

Die im Pixelbild identifizierten Objekte bzw. Punkte werden direkt an das CAD - z.B. AutoCAD - übermittelt, und im selben Prozess CAD-Elemente und Objekte (Linien, Volumenkörper, Netze, etc.) lagerichtig im CAD abgebildet.

Das Modellieren von CAD-Objekten erfolgt nicht mehr im CAD aufgrund von importierten Teilpunktwolken mit dem vorgenannten Identifikationsproblem. Vielmehr wird direkt mithilfe des Pixelbilds modelliert, aufgrund der klar identifizierbaren Konturen. Die erkannten Objekte werden über das Kommunikationsinterface direkt in die CAD-Engine übertragen.

Somit werden im CAD-System nur noch die Ergebnisvektoren und darauf aufbauende Objekte gehandhabt.

Im Einzelnen handelt es sich um ein Verfahren und eine Vorrichtung zur Bearbeitung von mindestens 3-dimensionalen Scan-Daten, die von mehrdimensionalen, vorzugsweise 3D-Laser-Scannern, aufgenommen wurden. Hierbei erfolgt ein Umwandeln der Scan-Daten in ein Pixelbild. Das Kommunikationsinterface übernimmt dabei die Aufgaben die Punktwerte des Pixelbildes (Zeile, Spalte, Graustufe, Farbwert) im 3D Koordinaten der Binärdatei zu übersetzen. Gleichzeitig werden im Interface diese Punkte zur Erstellung von CAD Objekten (Punkte, Linien, Flächen, Volumenkörper, etc.) eingesetzt. Hierbei wird die horizontale und vertikale Richtung des gescannten Punktes in Zeile und Spalte des Bildes umgewandelt.

Das Identifizieren und Bestimmen der Objekte in der Bilddarstellung durch Punkte, Linien, Flächen oder Körper, die um die Objekte geführt werden, kann automatisch, halbautomatisch oder vollautomatisch erfolgen, wobei entsprechende Bilderkennungsalgorithmen eingesetzt werden, um dem Benutzer Vorschläge zu unterbreiten. Im halbautomatischen Modus kann der Benutzer durch Punkte z.B. den Radius bestimmen, sodass der Kreis oder die Kugel bzw. die Röhre automatisch erstellt werden. Nach der Bestimmung der Objekte auf der Basis der Bilddaten erfolgt eine Umwandlung der Bilddaten der identifizierten und bestimmten Objekte in x-, y- und z-Koordinaten. Diese Koordinaten werden im CAD als Vektoren dargestellt.

Die Objekte werden als Linien, Polylinien, Flächen, Volumenkörper wie Kugeln, Kegel, Kegelstümpfe, Rohre, Quader oder Netze dargestellt.

Die Übergabe an das CAD-System erfolgt in der Regel unmittelbar an die CAD-Engine über das Kommunikationsinterface, sodass die Darstellung parallel im CAD-System auf der Basis der bestimmten Vektoren erfolgen kann.

Die hohe Effizienz wird erreicht, durch die besseren Betrachtungsmöglichkeiten der Informationen und der effizienteren Darstellung und Verwaltung von Bilddaten. Die Bilddarstellung erfolgt bevorzugt in JPEG, BMP, Tiff, wobei auch andere Formate denkbar sind.

Hieraus ergibt sich, dass das Verfahren eine Reihe von Vorteilen bietet.

Die einzelnen Scans in Binärform werden georeferenziert, das heißt zueinander in exakten geometrischen Bezug gesetzt. Dies erfolgt über eine allgemein gültige mathematische Funktion (3-D Koordinatentransformation). Dadurch können mehrere Scans und daraus resultierende Pixeldateien in exakten Bezug zueinander gesetzt werden und diese einzelnen Pixeldateien übergreifend direkt ausgewertet werden.

Wesentlicher Vorteil dabei ist, dass mehrere Ansichten (Pixeldateien) eines Objekts zur Generierung von CAD-Objekten benutzt werden können. Dadurch wird die Genauigkeit, Maßhaltung und Bearbeitungsgeschwindigkeit wesentlich erhöht.

Die Arbeit läuft insgesamt wesentlich schneller ab, da die Binärdaten nicht im RAM sondern auf der Platte gehalten werden können. Das RAM wird praktisch nur von Programmen und z.B. AutoCAD und einigen wenigen Vektorinformationen belegt.

Die Bearbeitung im Bild ist schneller, für den Nutzer verständlicher und damit weniger fehleranfällig.

Umständliches Exportieren von Punkten und Modellieren in unübersichtliche und unhandliche Punktesammlungen entfällt hierdurch.

### Kurze Beschreibung der Figuren.

Es zeigt:
Fig 1 eine Darstellung von 3-dimensionalen Scan-Punktwolken in einem CAD-Programm
Fig. 2 die Darstellung der Scan-Punktwolke aus Fig. 1 in Graustufen
Fig 3 eine Darstellung von 3-dimensionalen Scan-Punktwolken in einem CAD-Programm;
Fig. 4 Die Darstellung der Scan-Punktwolken aus Fig. 3 in Graustufen;
Fig. 5 ein Ablaufdiagramm (Zeile, Spalte, Farbwert) eines Teils des Verfahrens;
Fig. 6 ein Ablaufdiagramm eines weiteren Teils des Verfahrens.

### Beschreibung der bevorzugten Ausführungsform

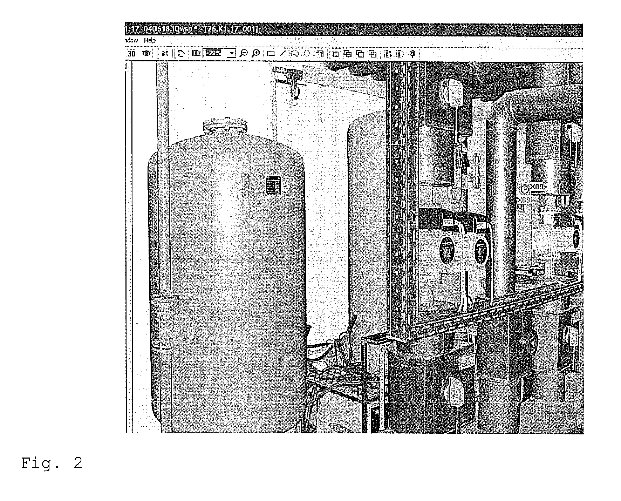

Die Fig. 1 zeigt eine Darstellung der dreidimensionalen Scan-Daten eines Laserscanners, wie sie von einem CAD-Programm dargestellt werden. Deutlich sind hier die Punktwolken und die schlechten Kontraste zu erkennen. Die Fig. 2 zeigt den umgewandelten Scan, der gemäß der vorliegenden Erfindung in ein Pixelbild umgewandelt wurde. Es ist deutlich zu erkennen, dass die Objekte besser sichtbar und für den Bearbeiter leichter zu identifizieren sind. Die Möglichkeit über Objektidentifikation im Pixelbild direkt ein CAD-Objekt im laufenden CAD-Programm zu generieren, stellt den Kern dieser Erfindung dar und führt zur wesentlichen Leistungssteigerung. Die Fig. 3 und 4 zeigt dieses Verfahren nochmals auf.

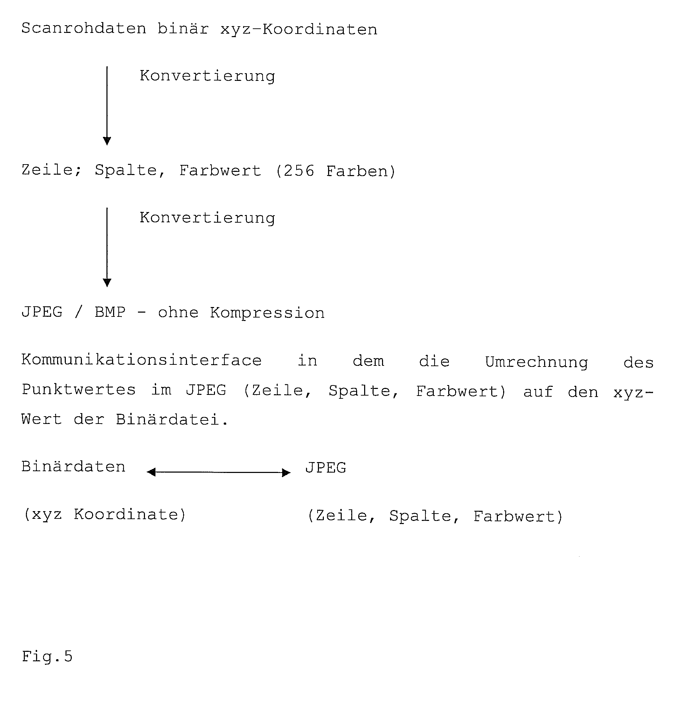

Die Fig. 5 zeigt einen Teil des Verfahrensablaufs, bei dem zuerst die Scanrohdaten binär vorliegen. Diese werden konvertiert in Zeile, Spalte, Farbwert. Durch die Erfindung ist sichergestellt, dass die Umrechnung der Punktwerte in der Pixeldatei auf die xyz-Werte der Scan-Rohdaten eindeutig ist. Dies erfolgt durch implementierte Funktionen.

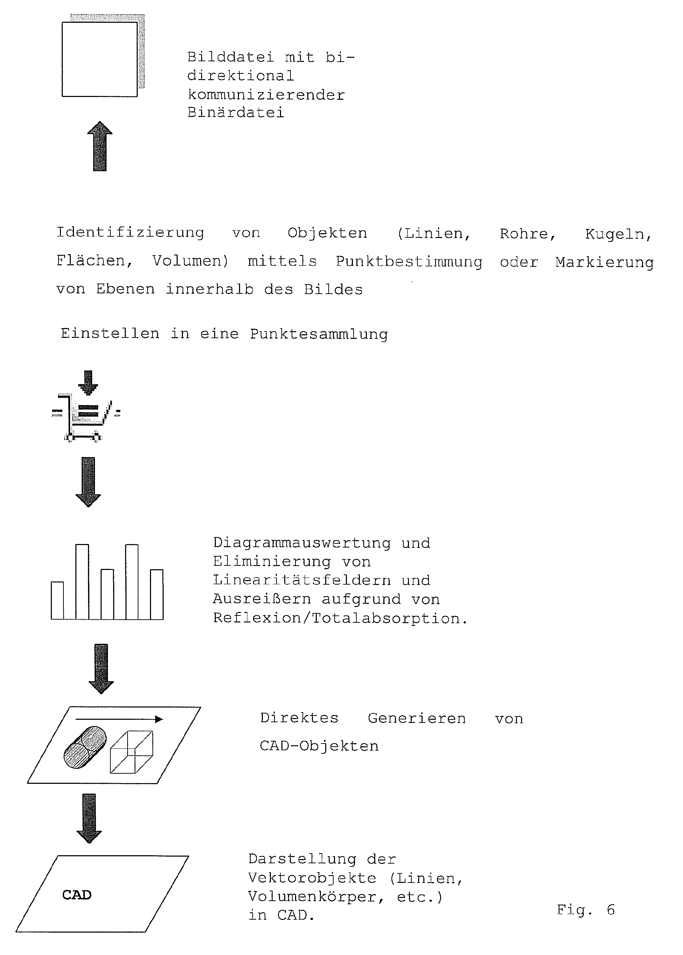

Die Fig. 6 zeigt dann weitere Schritte des erfindungsgemäßen Verfahrens, bei denen dann eine Identifizierung von Objekten mittels Bestimmung oder Markierung von Ebenen innerhalb des Pixel-Bildes erfolgt. Diese Punktesammlung wird dann in einer Diagrammauswertung betrachtet, um Linearitätsfehler und Ausreißer zu eliminieren, die z.B. aufgrund von Reflexionen entstanden sein können. Daraufhin werden die so identifizierten Objekte direkt als CAD-Objekte im laufenden CAD-System generiert.

## Patentansprüche

1. Verfahren zur Bearbeitung von mindestens 3-dimensionalen Scan-Daten, die von mehrdimensionalen Scannern, aufgenommen wurden, umfassend folgende Schritte:
- Umwandeln der Scan-Daten in ein Graustufenbild oder ein Farbbild, wobei die horizontale und vertikale Richtung des gescannten Punktes in Zeile und Spalte des Bildes umgewandelt werden, wobei die Umwandlung so erfolgt, dass eine Rückumwandlung möglich ist;
- Identifizieren und Bestimmen der Objekte in der Bilddarstellung durch Punkte, Linien, Flächen oder Körper, die um die Objekte geführt sind;
- Rückumwandeln der Bilddaten der identifizierten und bestimmten Objekte in x-, y- und z-Koordinaten;
- Übergabe der so bestimmten Objekte an ein CAD-System.

2. Verfahren nach dem vorhergehenden Anspruch, wobei das Identifizieren und Bestimmen der Objekte in der Bilddarstellung durch Punkte, Linien, Flächen oder Körper, die um die Objekte geführt sind erfolgt, wobei aus den so identifizierten Objekten mittels eines Kommunikationsinterfaces direkt ins laufende CAD-System die korrespondierenden Objekte generiert werden.

3. Verfahren nach einem oder mehreren der vorhergehenden Ansprüche, wobei die Scan-Daten von einem Laserscanner stammen, insbesondere einem 3D-Laserscanner.

4. Verfahren nach einem oder mehreren der vorhergehenden Ansprüche, wobei bei der Übergabe der bestimmten Objekte an das CAD-System die Vektordaten anstatt der Punktdaten übergeben werden.

5. Verfahren nach einem oder mehreren der vorhergehenden Ansprüche, wobei Volumenkörper oder Netze zur Bestimmung der Objekte dienen, wobei die Volumenkörper vorzugsweise aus Rohren, Kugeln, Kegeln oder Quadern bestehen.

6. Verfahren nach einem oder mehreren der vorhergehenden Ansprüche, wobei die einzelnen identifizierten Punkte dargestellt werden und Punkte mit Messfehlern über die Darstellung in einem Umgebungsdiagramm identifiziert und ausgefiltert werden.

7. Verfahren nach einem oder mehreren der vorhergehenden Ansprüche, wobei Sammlungen von identifizierten Objektinformationen möglich sind, die dann gesammelt an das CAD-System zur Generierung von entsprechenden Objekten übergeben werden.

8. Verfahren nach einem oder mehreren der vorhergehenden Ansprüche, wobei die bestimmten Punkte, Linien, Flächen, Körper oder Netze direkt, vorzugsweise in Echtzeit, dem CAD-System übergeben werden.

9. Verfahren nach dem vorhergehenden Anspruch, wobei die Übergabe an das CAD-System so erfolgt, dass eine Darstellung parallel im CAD-System auf der Basis der bestimmten Vektoren erfolgt.

10. Verfahren nach einem oder mehreren der vorhergehenden zwei Ansprüche, wobei die Übergabe von Objektinformationen direkt an die CAD-Engine über eine Schnittstelle erfolgt, sodass eine Übergabe über ein Dateiformat entfällt.

11. Verfahren nach einem oder mehreren der vorhergehenden Ansprüche, wobei die Bilddarstellung in einem beliebigen Bilddateiformat, möglichst in Pixelformaten erfolgt, wie in JPEG, BMP, Tiff, G4, Giff, JPG2004

12. Vorrichtung zur Bearbeitung von mindestens 3-dimensionalen Scan-Daten, die von mehrdimensionalen Scannern, aufgenommen wurden, umfassend folgende Elemente:
- Mittel zum Umwandeln der Scan-Daten mit x-, y- und z-Koordinaten in ein Graustufenbild oder ein Farbbild, wobei die horizontale und vertikale Punktrichtung in Zeile und Spalte des Bildes umgewandelt werden, und die Umwandlung so erfolgt, dass eine eindeutige Rückumwandlung möglich ist;
- Mittel zum Identifizieren und Bestimmen der Objekte in der Bilddarstellung, durch Punkte, Linien, Flächen oder Körper, die um die Objekte geführt sind;
- Mittel zum Rückumwandeln der Bilddaten der identifizierten und bestimmten Objekte in x-, y- und z-Koordinaten;
- Mittel zur Übergabe der so bestimmten Objekte an ein CAD-System.

13. Vorrichtung nach dem vorhergehenden Vorrichtungsanspruch, wobei die Scan-Daten von einem Laserscanner stammen, insbesondere einem 3D-Laserscanner.

14. Vorrichtung nach einem oder mehreren der vorhergehenden Vorrichtungsansprüche, wobei die Mittel zu Übergabe so ausgebildet sind, dass bei der Übergabe der bestimmten Objekte an das CAD-System die Vektordaten anstatt der Punktdaten übergeben werden.

15. Vorrichtung nach einem oder mehreren der vorhergehenden Vorrichtungsansprüche, wobei Volumenkörper oder Netze zur Bestimmung der Objekte dienen, wobei die Volumenkörper vorzugsweise aus Rohren, Kugeln, Kegeln oder Quadern bestehen.

16. Vorrichtung nach einem oder mehreren der vorhergehenden Vorrichtungsansprüche, wobei Mittel vorhanden sind, die die einzelnen identifizierten Punkte hinsichtlich des Linearitätsfehlers in den Binärdaten über Darstellung des Punktes in einem Umgebungsdiagramm prüfen und ggfs. korrigieren.

17. Vorrichtung nach dem vorhergehenden Vorrichtungsanspruch, wobei die Übergabe an das CAD-System so erfolgt, dass die Darstellung parallel im CAD-System auf der Basis der bestimmten Vektoren erfolgt.

18. Vorrichtung nach einem oder mehreren der vorhergehenden zwei Vorrichtungsansprüche, wobei die Übergabe direkt an die CAD-Engine über eine Schnittstelle erfolgt, sodass eine Übergabe über ein Dateiformat entfällt.

19. Vorrichtung nach einem oder mehreren der vorhergehenden Vorrichtungsansprüche, wobei die Bilddarstellung in JPEG, BMP, Tiff, G4, Giff, JPG2004 oder SVGA erfolgt.

20. Vorrichtung nach dem vorhergehenden Vorrichtungsanspruch, wobei die Bilddarstellung möglichst verlustfrei ist.
